# EUROPEAN PATENT SPECIFICATION

(11) **EP 4 435 038 B1**
(45) Date of publication and mention of the grant of the patent: **11.02.2026**
(21) Application number: 24165206.4
(22) Date of filing: 21.03.2024
(51) Int. Cl.: C08J 7/12

(54) **PLASMA SURFACE TREATMENT METHOD APPLIED TO ELASTOMERS**
AUF ELASTOMERE ANGEWANDTES PLASMAOBERFLÄCHENBEHANDLUNGSVERFAHREN.
PROCÉDÉ DE TRAITEMENT DE SURFACE PAR PLASMA APPLIQUÉ À DES ÉLASTOMÈRES.

(30) Priority: 23.03.2023 IT 202300005565
(43) Date of publication of application: 25.09.2024
(73) Proprietor: Coating Technology S.r.l., 24060 Castelli Calepio (BG) (IT)
(72) Inventor: BELOMETTI, Paolo, 25030 Paratico (BS) (IT)
(74) Representative: Mittler, Andrea

(56) References cited:
- EP-A1- 1 426 119
- WO-A1-2014/160523
- K.L. MILLS ET AL: "The mechanical properties of a surface-modified layer on polydimethylsiloxane", NIH PUBLIC ACCESS AUTHOR MANUSCRIPT, vol. 23, no. 1, 1 January 2008 (2008-01-01), pages 1 - 29, XP055679692, DOI: 10.1557/JMR.2008.0029

## Description

The present invention relates to a plasma surface treatment method applied to elastomers.

The phrase surface treatments applied to elastomers generally means a high-pressure technical cleaning to minimize the presence of contaminants on the item, or surface coating treatments. It is the main purpose of these treatments to facilitate the sliding of the surface of the treated items.

As is known, elastomers, generally referred to as rubbers, have the feature of having a high coefficient of friction which slows down or prevents the simple operations of assembly of parts on components. Surface treatments arise from the need to facilitate the sliding during assembly, in particular deposits of lubricating lacquers which, through an automatic spraying process, are applied to the surface of the items; the deposit, generally referred to as "coating," has a thickness ranging from 5 µm (micrometers) to 20 µm.

Most of the lacquers used are aqueous emulsions based on PTFE (polytetrafluoroethylene) and represent the standard coatings, those adapted to slide the piece during assembly. However, a series of other lacquers arose, based on solvents, PFPE (perfluoropolyethers), transparent and colored silicone emulsions, which according to needs (temperature resistance, contact with gasoline, contact with chemical agents, etc.) are always used and applied with spraying technology.

All these lacquers described so far are applicable to the vast majority of elastomer blends (FKM, i.e., fluorinated elastomers, EPDM, i.e., terpolymers obtained from the copolymerization of ethylene, propylene and from a third monomer represented by a diene, NBR, i.e., an acrylonitrile and butadiene copolymer, HNBR, i.e., hydrogenated acrylonitrile butadiene, AEM and ACM, i.e., acrylic rubbers) but not on silicone blends.

The need to treat molded silicone items gives rise to anti-friction treatments carried out with plasma technology; these are essentially silicon (HMDSO, i.e., hexamethyldisiloxane) deposits which make the surface smooth, thus helping the assembly of the item.

There are also silicone resins which when sprayed onto the silicone make the surface have a "soft-touch" effect (for example in sex-toys and phone covers) but which are unlikely to remain on the surface for long.

In the medical and pharmaceutical world, most of the items assembled on the components are silicone molded for a number of reasons related to the features of this blend. Silicone is the blend with the highest coefficient of friction which slows down assembly operations and with a high electrostaticity which creates inconveniences both during sorting and for issues related to contamination from dust or foreign agents.

However, the items intended for the medical world hardly undergo coating treatments due to the risk of coating loss: the coatings could detach from the surface of the treated piece and deposit elsewhere, jeopardizing the product purity.

Plasma treatments with oxygen on elastomers are known, for example in patent documents EP-807140 and EP-3186300, or in scientific literature documents entitled "The mechanical properties of a surface-modified layer on polydimethylsiloxane", published by Cambridge University on 31.1.2011 and written by K.L. Mills, Xiaoyue Zhu, Shuichi Takayama and D. Thouless, and "Topographies of plasma-hardened surfaces of poly(dimethylsiloxane)" published by "Journal of Applied Physics" 108, 093522, in 2010, and written by Patrick Görrn and Sigurd Wagner.

EP-807140 describes a combination of plasma treatments with oxygen, wherein a treatment occurs with pressure between 1.33 Pa (Pascal) and 6.67 Pa, for a period between 30 seconds and 10 minutes.

Said document entitled "The mechanical properties of a surface-modified layer on polydimethylsiloxane" describes a plasma surface treatment with oxygen for a period of 4 minutes.

WO-2014/160523 describes a plasma surface treatment method applied to a polymer of a LED to obtain a low coefficient of friction. Said treatment lasts 60 seconds.

It is the object of the present invention to carry out a surface treatment method applied to elastomers, in particular silicone elastomers, without deposition of coating material.

It is a further object of the present invention that the treatment method modifies the surface of the piece without altering the hardness, size and compatibility features.

It is still another object of the present invention that the treatment method gives the surface of the piece a low coefficient of friction (at the levels of PTFE-based lubricating lacquers), thus minimizing electrostaticity.

In accordance with the invention, such objects are achieved by a plasma surface treatment method applied to elastomers as defined in claim 1.

Advantageously, the surface treatment method according to the present invention allows obtaining a smooth elastomer which is soft to the touch and has no transferable material on the surface.

The application of the method occurs with a known machine for plasma surface treatments, without changes in structure but only in use parameters.

The gas used, oxygen, is easily available and inexpensive.

The method is applicable to a wide range of elastomers, of various shapes.

These and other features of the present invention will become more apparent from the following detailed description in practical embodiments thereof illustrated by way of non-limiting example in the accompanying drawings, in which:
figure 1 shows a graph of a first laboratory test on an elastomer sample, in the absence of the claimed treatment;
figure 2 shows a graph of a second laboratory test on an elastomer sample, following a claimed treatment lasting 60 seconds;
figure 3 shows a graph of a third laboratory test on an elastomer sample, following a claimed treatment lasting 15 minutes;
figure 4 shows a graph of a fourth laboratory test on an elastomer sample, following a claimed treatment lasting one hour;
figure 5 shows a graph of a fifth laboratory test on an elastomer sample, following a claimed treatment lasting 5 hours;
figure 6 shows a graph of a sixth laboratory test on an elastomer sample, following a claimed treatment lasting 15 hours.

A plasma surface treatment method applied to elastomers, preferably silicone elastomers, occurs in a plasma treatment machine with a controlled atmosphere sealed chamber in which a vacuum is made and then only oxygen is introduced with a flow between 0.8 liters per minute and 1.2 liters per minute, preferably one liter per minute, equal to about 50% of the maximum volume per minute to be introduced into the sealed chamber by the machine.

In the machine, in which the elastomer to be treated is introduced, an oxygen concentration close to 100% (99.999%) is achieved with a pressure ranging from 0 to 2 millibars (or from about 0.2 to 6 Pascal).

The duration of the treatment depends on the blend and hardness of the elastomer, and is however between 15 minutes and 15 hours, preferably between 10 hours and 15 hours.

The treated elastomer is preferably LSR (liquid silicone rubber), VMQ (silicone rubber), NBR (acrylonitrile and butadiene copolymer), HNBR (hydrogenated acrylonitrile butadiene), FKM (fluorinated elastomers), AEM (acrylic rubbers) or EPDM (terpolymers obtained from the copolymerization of ethylene, propylene and from a third monomer represented by a diene).

The treatment can occur in a static or rotary manner, i.e., the elastomer to be treated can remain stationary in place or rotated by appropriate rotary means of the machine.

During the treatment, the oxygen flowing in the machine reacts with the surface of the elastomer, making it smoother.

The electric power used is between 800 watts and 1200 watts, preferably of 1000 watts for any type of elastomer product to be treated.

The indicated treatment duration allows achieving the best possible surface smoothness result; with less time the desired results would not be achieved, while an increase in duration would not improve the technical result, however increasing the cost of the treatment in particular in terms of energy and oxygen used.

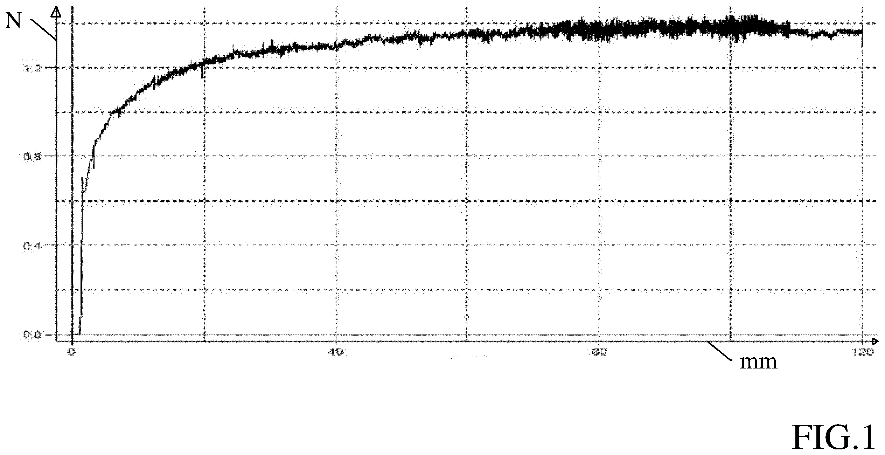

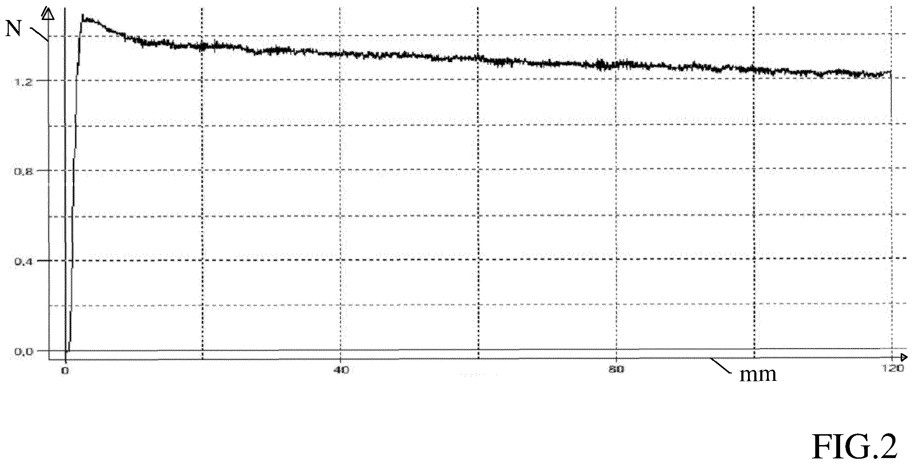

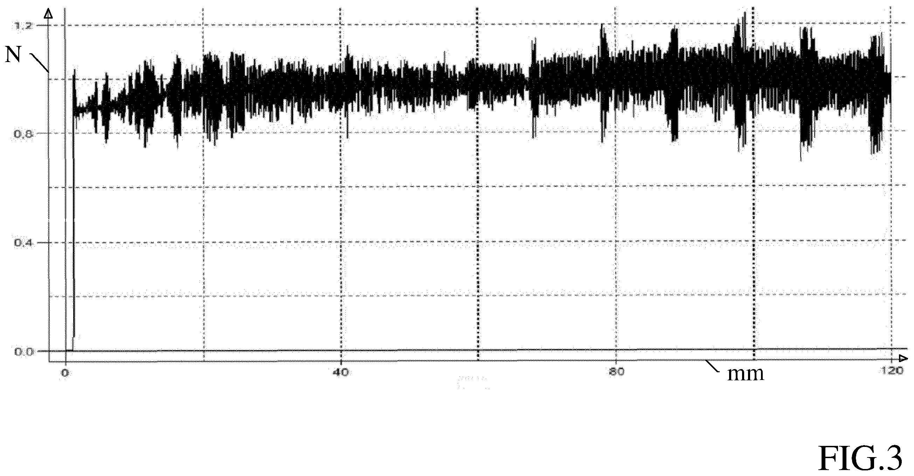

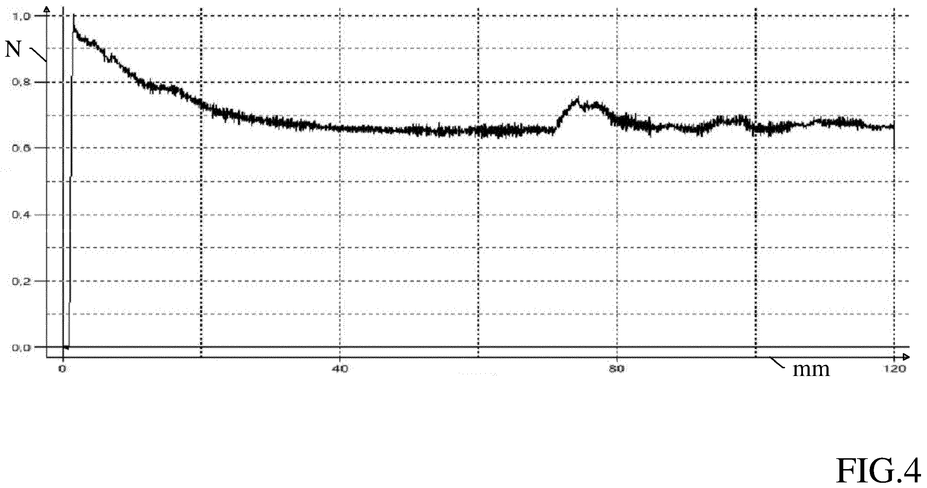

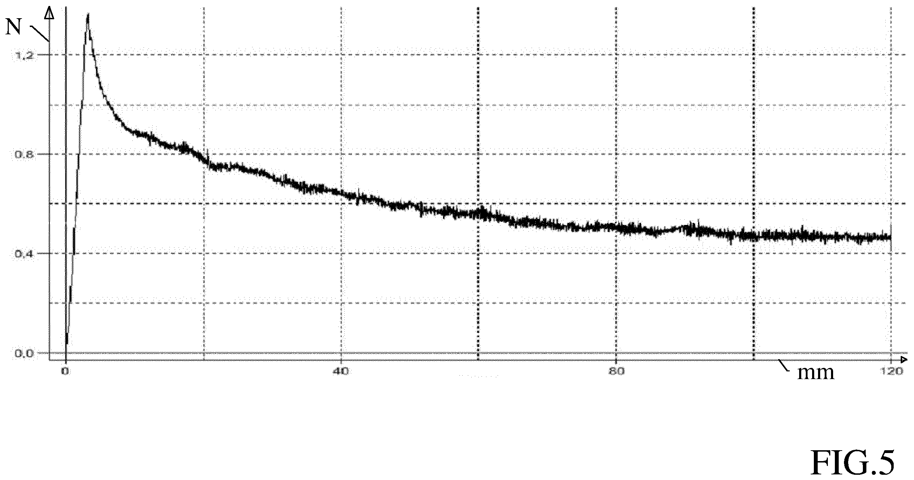

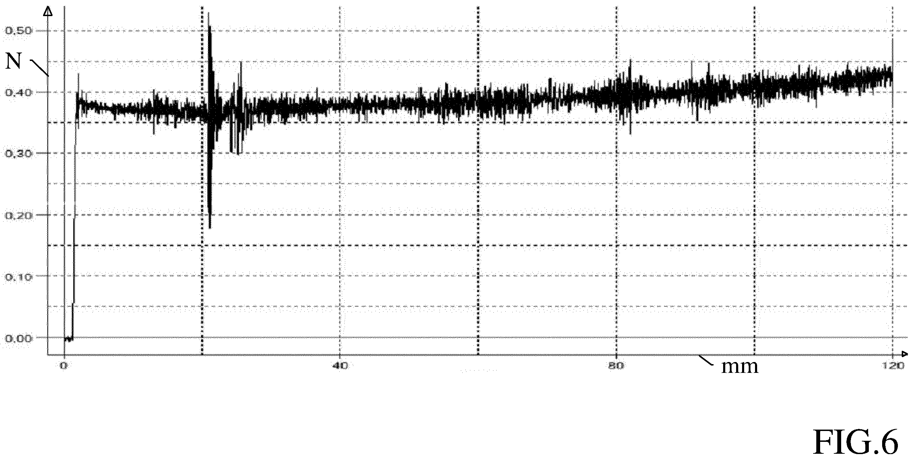

Figures 1-6 show graphs related to laboratory tests on elastomer samples, figure 1 on an elastomer sample not treated according to the present invention, figures 2-6 on an elastomer sample treated in accordance with the present invention according to different treatment durations.

The laboratory tests, carried out by Mecmesin on behalf of the Applicant, consist of graphs useful for the detection of the coefficient of static friction (static COF) and dynamic friction (dynamic COF) in moving the sample on a slide weighing 200 g (grams) over a length of 120 mm (millimeters) with a force of 10 N (Newton).

The static COF refers to the first 10 mm of travel (initial detachment), in particular the value thereof corresponds to the maximum peak, i.e., the maximum force, recorded in the first 10 mm of traction of the slide divided by the weight of the slide.

The dynamic COF refers to the travel between 10 mm and 120 mm, in particular the value thereof corresponds to the average of the force values recorded from 10 mm to 120 mm divided by the weight of the slide.

In all the graphs, the abscissa refers to the travel (mm) of the slide, the ordinate to the force (N) applied to the slide.

The test sample is always an O-ring gasket, with an inner diameter of 25 mm and a diameter thickness of 2 mm, of LSR type, white.

Here are the tables 1-6 referring to the respective graphs in figures 1-6.

**Table 1**

| Calculation | Maximum peak | Average | Static COF | Dynamic COF |
|---|---|---|---|---|
| Unit | N | N | | |
| Sample 1 | 0.826 | 1.325 | 0.42 | 0.68 |
| Minimum | 0.826 | 1.325 | 0.42 | 0.68 |
| Maximum | 0.826 | 1.325 | 0.42 | 0.68 |
| Average | 0.826 | 1.325 | 0.42 | 0.68 |
| SD | N/A | N/A | N/A | N/A |

**Table 2**

| Calculation | Maximum peak | Average | Static COF | Dynamic COF |
|---|---|---|---|---|
| Unit | N | N | | |
| Sample 1 | 1.498 | 1.286 | 0.76 | 0.66 |
| Minimum | 1.498 | 1.286 | 0.76 | 0.66 |
| Maximum | 1.498 | 1.286 | 0.76 | 0.66 |
| Average | 1.498 | 1.286 | 0.76 | 0.66 |
| SD | N/A | N/A | N/A | N/A |

**Table 3**

| Calculation | Maximum peak | Average | Static COF | Dynamic COF |
|---|---|---|---|---|
| Unit | N | N | | |
| Sample 1 | 1.037 | 0.978 | 0.53 | 0.50 |
| Minimum | 1.037 | 0.978 | 0.53 | 0.50 |
| Maximum | 1.037 | 0.978 | 0.53 | 0.50 |
| Average | 1.037 | 0.978 | 0.53 | 0.50 |
| SD | N/A | N/A | N/A | N/A |

**Table 4**

| Calculation | Maximum peak | Average | Static COF | Dynamic COF |
|---|---|---|---|---|
| Unit | N | N | | |
| Sample 1 | 1.007 | 0.681 | 0.51 | 0.35 |
| Minimum | 1.007 | 0.681 | 0.51 | 0.35 |
| Maximum | 1.007 | 0.681 | 0.51 | 0.35 |
| Average | 1.007 | 0.681 | 0.51 | 0.35 |
| SD | N/A | N/A | N/A | N/A |

**Table 5**

| Calculation | Maximum peak | Average | Static COF | Dynamic COF |
|---|---|---|---|---|
| Unit | N | N | | |
| Sample 1 | 1.370 | 0.581 | 0.70 | 0.30 |
| Minimum | 1.370 | 0.581 | 0.70 | 0.30 |
| Maximum | 1.370 | 0.581 | 0.70 | 0.30 |
| Average | 1.370 | 0.581 | 0.70 | 0.30 |
| SD | N/A | N/A | N/A | N/A |

**Table 6**

| Calculation | Maximum peak | Average | Static COF | Dynamic COF |
|---|---|---|---|---|
| Unit | N | N | | |
| Sample 1 | 0.430 | 0.389 | 0.22 | 0.20 |
| Minimum | 0.430 | 0.389 | 0.22 | 0.20 |
| Maximum | 0.430 | 0.389 | 0.22 | 0.20 |
| Average | 0.430 | 0.389 | 0.22 | 0.20 |
| SD | N/A | N/A | N/A | N/A |

The above values show that if the treatment duration is less than 15 minutes, there are no appreciable improvements in terms of dynamic COF with respect to the case of no treatment.

In particular, if the treatment lasts 60 seconds (table 2), the dynamic COF does not substantially change with respect to the case of no treatment (table 1). Note indeed that the dynamic COF goes from 0.68 to 0.66.

There are consistent advantages from a treatment duration of 15 minutes (table 3), in fact the dynamic COF is reduced to 0.50.

The dynamic COF then progressively improves, stabilizing at a value of 0.20, approaching a treatment duration of 15 hours. At about 10 hours, the dynamic COF is already well below 0.30, about 0.25.

Accordingly, as already noted above, a treatment between 10 hours and 15 hours is preferable, a treatment between 15 minutes and 10 hours however leading to obtain appreciable advantages in terms of dynamic COF.

The temperature inside the sealed chamber during the treatment is between 3°C and 40°C, preferably between 8°C and 12°C.

Note that the machine is known but for common plasma coating treatments. The definition of said parameters (pressure, temperature, duration) allowed achieving an excellent result from the point of view of smoothness, without the need to actually deposit anything on the surface of the elastomer.

Advantageously, a known machine for plasma treatments without deposition of coating material is used.

Analyses were carried out at the laboratory of Istituto Italiano Sicurezza dei Giocattoli (IISG srl) in Cabiate (CO, Italy) for the compatibility of the treatment of the present invention in the food industry, in particular for skin contact and substance migration. The results were excellent.

In test report no. 22.53496a dated 1.12.2022, at the end of the surface treatment according to the present invention on a silicone product (item no. 714536), in accordance with the method according to EN-71-3:2019, a migration of organic tin (EN-1400:2013 + A2:2018) below the detectability limit of the method itself was found.

More in particular, using a gas chromatograph provided with a mass detector (GC-MSD), the concentration of organic tin on the silicone product was lower than 0.5 mg (milligrams) per kg (kilogram), where the allowed limit is 1.3 mg/kg.

Similar satisfactory results, i.e., with detections below the detectability limit of the same test method (EN-71-3:2019), reported in the same test report, were achieved for the migration of chromium (VI) by means of a high-resolution UV-Vis spectrophotometer provided with an integrating sphere, and other materials (with ICP-OES instrument, i.e., "Inductively Coupled Plasma - Optical Emission Spectroscopy", with ICP-MS technique, i.e., "Inductively Coupled Plasma - Mass Spectrometry") such as aluminum, antimony, arsenic, barium, boron, cadmium, zinc, copper, lead, manganese, mercury, tin, selenium, strontium, and nickel.

Again in the same test report, satisfactory results are reported regarding the content of volatile compounds equal to 0.37% by weight, using the same method indicated above (EN-1400:2013 + A2:2018).

Using the method according to EN-71-11:2005, a migration of formaldehyde also occurred, still below the detectability limit of the method, by means of an ultraviolet spectrometer scanning (UV system).

Color transfer (EN-1400:2013 + A2:2018) was also found (degree 5) below the standard (higher, degree 4) by applying the DIN-53160-1-:2010 method, any color transfer being visually evaluated with respect to the grayscale (EN-20105-A03).

Advantageously, the surface treatment method according to the present invention allows obtaining a smooth elastomer which is soft to the touch and has no transferable material on the surface.

The application of the method occurs with a known machine for plasma surface treatments, without changes in structure but only in use parameters.

The gas used, oxygen, is easily available and inexpensive.

The method is applicable to a wide range of elastomers, of various shapes.

A single surface treatment on the piece is sufficient to achieve said advantageous results.

Finally three detailed implementation examples are reported below.

### Example 1.

Treated product: O-ring gasket; dimensions: inner diameter 42 mm (mm), diameter thickness 1.5 mm; FKM, hardness 70 shore A, black.
Pressure: 0.05 millibar.
Duration: 12 hours.
Treatment method: rotary.
Temperature: 10°C.
Oxygen concentration in the sealed chamber: 99.999%.

### Example 2.

Treated product: washer; dimensions: outer diameter 22 mm, inner diameter 12 mm, height 3 mm; AEM, shore hardness 80 A.
Pressure: 0.09 millibar.
Duration: 14 hours.
Treatment method: static.
Temperature: 8°C.
Oxygen concentration in the sealed chamber: 99.999%.

### Example 3.

Treated product: V-ring gasket; dimensions: outer diameter 32 mm, inner diameter 24 mm, height 4 mm; peroxide EPDM, hardness 85 shore A.
Pressure: 0.07 millibar.
Duration: 13 hours.
Treatment method: rotary.
Temperature: 12°C.
Oxygen concentration in the sealed chamber: 99.999%.

## Claims

1. Plasma surface treatment method applied to elastomers, preferably silicone elastomers, in a plasma treatment machine with a controlled atmosphere sealed chamber in which a vacuum is created and then only oxygen is introduced, wherein
the oxygen pressure in the sealed chamber is between 0 and 2 millibars,
the electric power used is between 800 watts and 1200 watts,
the temperature inside the sealed chamber during the treatment is between 3°C and 40°C.
**characterized in that**
the duration of the treatment is between 15 minutes and 15 hours.

2. Method according to claim 1, **characterized in that** the duration of the treatment is between 10 hours and 15 hours.

3. Method according to claim 1 or 2, **characterized in that** the temperature inside the sealed chamber during the treatment is between 8°C and 12°C.

4. Method according to claim 3, **characterized in that** the electric power used is equal to 1000 watts.

5. Method according to any one of the preceding claims, **characterized in that** the treatment takes place in a static manner.

6. Method according to any one of claims 1-4, **characterized in that** the treatment takes place in a rotary manner.

7. Method according to any one of the preceding claims, **characterized in that** the treated elastomer alternatively is an acrylonitrile and butadiene copolymer, a hydrogenated acrylonitrile butadiene, a fluorinated elastomer, an acrylic rubber, a terpolymer obtained from the copolymerization of ethylene, propylene and from a third monomer represented by a diene.

8. Method according to any one of the preceding claims, **characterized in that** oxygen is introduced into the sealed chamber with a flow between 0.8 liters per minute and 1.2 liters per minute.

9. Method according to claim 8, **characterized in that** oxygen is introduced into the sealed chamber with a flow of one liter per minute.

## Patentansprüche

1. Verfahren zur Plasmaoberflächenbehandlung von Elastomeren, vorzugsweise Silikonelastomeren, in einer Plasmabehandlungsmaschine mit einer unter kontrollierter Atmosphäre versiegelten Kammer, in der ein Vakuum erzeugt und anschließend nur Sauerstoff eingeleitet wird, wobei
der Sauerstoffdruck in der geschlossenen Kammer zwischen 0 und 2 Millibar beträgt, die verwendete elektrische Leistung zwischen 800 Watt und 1200 Watt beträgt,
die Temperatur innerhalb der geschlossenen Kammer während der Behandlung zwischen 3 °C und 40 °C beträgt
**dadurch gekennzeichnet, dass**
die Dauer der Behandlung zwischen 15 Minuten und 15 Stunden beträgt.

2. Verfahren nach Anspruch 1, **dadurch gekennzeichnet, dass** die Dauer der Behandlung zwischen 10 Stunden und 15 Stunden beträgt.

3. Verfahren nach Anspruch 1 oder 2, **dadurch gekennzeichnet, dass** die Temperatur innerhalb der versiegelten Kammer während der Behandlung zwischen 8 °C und 12 °C beträgt.

4. Verfahren nach Anspruch 3, **dadurch gekennzeichnet, dass** die verwendete elektrische Leistung 1000 Watt beträgt.

5. Verfahren nach einem der vorstehenden Ansprüche, **dadurch gekennzeichnet, dass** die Behandlung statisch erfolgt.

6. Verfahren nach einem der Ansprüche 1 bis 4, **dadurch gekennzeichnet, dass** die Behandlung rotierend erfolgt.

7. Verfahren nach einem der vorstehenden Ansprüche, **dadurch gekennzeichnet, dass** das behandelte Elastomer alternativ ein Acrylnitril-Butadien-Copolymer, ein hydriertes Acrylnitril-Butadien, ein fluoriertes Elastomer, ein Acrylkautschuk oder ein Terpolymer ist, das aus der Copolymerisation von Ethylen, Propylen und einem dritten Monomer, das durch ein Dien dargestellt wird, erhalten wird.

8. Verfahren nach einem der vorstehenden Ansprüche, **dadurch gekennzeichnet, dass** Sauerstoff mit einem Durchfluss zwischen 0,8 Litern pro Minute und 1,2 Litern pro Minute in die versiegelte Kammer eingeleitet wird.

9. Verfahren nach Anspruch 8, **dadurch gekennzeichnet, dass** Sauerstoff mit einer Geschwindigkeit von einem Liter pro Minute in die versiegelte Kammer eingeleitet wird.

## Revendications

1. Procédé de traitement de surface par plasma appliqué à des élastomères, de préférence à des élastomères siliconés, dans une machine de traitement par plasma avec une chambre hermétique à atmosphère contrôlée dans laquelle un vide est créé et ensuite uniquement de l'oxygène est introduit, dans lequel
la pression d'oxygène dans la chambre hermétique est comprise entre 0 et 2 millibars,
la puissance électrique utilisée est comprise entre 800 watts et 1 200 watts,
la température à l'intérieur de la chambre hermétique pendant le traitement est comprise entre 3°C et 40°C,
**caractérisé en ce que** la durée du traitement est comprise entre 15 minutes et 15 heures.

2. Procédé selon la revendication 1, **caractérisé en ce que** la durée du traitement est comprise entre 10 heures et 15 heures.

3. Procédé selon la revendication 1 ou 2, **caractérisé en ce que** la température à l'intérieur de la chambre hermétique pendant le traitement est comprise entre 8°C et 12°C.

4. Procédé selon la revendication 3, **caractérisé en ce que** la puissance électrique utilisée est égale à 1 000 watts.

5. Procédé selon l'une quelconque des revendications précédentes, **caractérisé en ce que** le traitement se déroule d'une manière statique.

6. Procédé selon l'une quelconque des revendications 1 à 4, **caractérisé en ce que** le traitement se déroule d'une manière rotative.

7. Procédé selon l'une quelconque des revendications précédentes, **caractérisé en ce que** l'élastomère traité en variante est un copolymère d'acrylonitrile et de butadiène, un acrylonitrile-butadiène hydrogéné, un élastomère fluoré, un caoutchouc acrylique, un terpolymère obtenu par copolymérisation d'éthylène, de propylène et d'un troisième monomère représenté par un diène.

8. Procédé selon l'une quelconque des revendications précédentes, **caractérisé en ce que** de l'oxygène est introduit dans la chambre hermétique à un débit compris entre 0,8 litre par minute et 1,2 litres par minute.

9. Procédé selon la revendication 8, **caractérisé en ce que** de l'oxygène est introduit dans la chambre hermétique à un débit d'un litre par minute.
